# NEUE EUROPÄISCHE PATENTSCHRIFT

(11) **EP 1 088 175 B2**
(45) Veröffentlichungstag und Bekanntmachung des Hinweises auf die Entscheidung über den Einspruch: **10.11.2010**
(45) Hinweis auf die Patenterteilung: 14.01.2004
(21) Anmeldenummer: 99955523.8
(22) Anmeldetag: 22.05.1999
(51) Int. Cl.: F16D 25/08

(54) **FÜHRUNGSHÜLSE FÜR EINEN NEHMERZYLINDER**
GUIDE BUSHING FOR A SLAVE CYLINDER
DOUILLE DE GUIDAGE POUR CYLINDRE RECEPTEUR

(30) Priorität: 10.06.1998 DE 19825965
(43) Veröffentlichungstag der Anmeldung: 04.04.2001
(73) Patentinhaber: Schaeffler Technologies GmbH & Co. KG, 91074 Herzogenaurach (DE)
(72) Erfinder: MEYER, Gerhard, D-91611 Lehrberg (DE); WINKELMANN, Ludwig, D-91056 Erlangen (DE); ADLER, Dieter, D-91074 Herzogenaurach (DE)
(86) Internationale Anmeldenummer: PCT/EP1999/003546
(87) Internationale Veröffentlichungsnummer: WO 1999/064757

(56) Entgegenhaltungen:
- EP-A- 0 168 932
- DE-A- 4 313 346
- FR-A- 2 757 590
- GB-A- 2 259 555

## Beschreibung

### Gebiet der Erfindung

Die vorliegende Erfindung betrifft ein druckmittelbeaufschlagbares Ausrücksystem für eine Schalttrennkupplung von Fahrzeugen. Derartige Ausrücksysteme dienen dazu, die im Antriebsstrang im Fahrzeug eingesetzte, als Schalttrennkupplung dienende Reibungskupplung zu betätigen. Das druckmittelbeaufschlagbare Ausrücksystem umfaßt ein konzentrisch zu einer Antriebswelle angeordnete, als Nehmerzylinder bezeichnete Kolben-Zylindereinheit. In den lösbar an einem Getriebegehäuse befestigten Zylinder ist in einem kreisringförmig gestalteten Druckraum, welcher radial von einer Innenwandung des Zylinders und einer Führungshülse begrenzt ist, ein Ringkolben geführt. Der druckraumseitig mit einer Abdichtung versehene Ringkolben ist an dem vom Druckraum abgewandten Ende über ein Ausrücklager mit Ausrückelementen der Schalttrennkupplung verbunden. Die Führungshülse ist an dem Zylinder lage- und/oder drehfixiert und abgedichtet angeordnet.

### Hintergrund der Erfindung

Aus der DE 43 13 346 A1 ist ein Ausrücksystem der zuvor beschriebenen Gattung bekannt. Die durch ein spanloses Tiefziehverfahren hergestellte Führungshülse ist im Anlagebereich des Ausrücksystems am Getriebegehäuse mit einem Ringflansch versehen, der in einer Randzone formschlüssig am Zylinder, d. h. dem Druckgehäuse des Ausrücksystems befestigt ist. Der Ringflansch dient zum einen als Begrenzung des mit dem Druckfluid beaufschlagbaren Druckraums. Zum anderen dient ein axial vorstehender Bereich des Ringflansches zur Zentrierung in einer Aufnahme des Getriebegehäuses. In der Einbaulage ist der Ringflansch zwischen dem Ausrücksystem und dem Getriebegehäuse verspannt und sorgt damit für eine Lagefixierung der Führungshülse. Zur Abdichtung der Führungshülse gegenüber dem Zylinder ist eine Dichtung radial versetzt zum Druckraum angeordnet. Bei einer Druckbeaufschlagung stellt sich eine relativ große wirksame Druckfläche ein, die sich von der Mantelfläche der Führungshülse bis zur Dichtung erstreckt und damit die Kreisringfläche des Druckraums deutlich übersteigt. Entsprechend der wirksamen Druckfläche kommt es zu einer erhöhten Beanspruchung des Zylinders, so daß dieser zur Vermeidung einer Deformation bei hohen Drücken entsprechend stärker dimensioniert werden muß.
Die GB 2 259 555 A offenbart einen Nehmerzylinder aus Kunststoff mit einer Führungshülse für ein Kupplungsausrücksystem.

### Aufgabe der Erfindung

Aufgabe der Erfindung ist die Verbesserung der Verbindung zwischen Führungshülse und Zylinder.

### Zusammenfassung der Erfindung

Die zuvor genannte Problemstellung wird mit den Merkmalen des Anspruchs 1 gelöst. Das erfindungsgemäße Ausrücksystem umfaßt eine Führungshülse, die radial zentriert und axial abgestützt am Zylinder befestigt ist. Die Abstützung der Führungshülse erfolgt dabei erfindungsgemäß vorteilhaft rechtwinkelig in einem möglichst großen radialen Abstand zur Längsachse der Führungshülse. Zur Abdichtung der Führungshülse gegenüber dem Zylinder ist die Dichtung versetzt zum Druckraum angeordnet, wobei deren Einbaulage mit dem Druckraum übereinstimmt, d. h. innerhalb der Fläche des kreisringförmig gestalteten Druckraums angeordnet ist. Eine Druckbeauschlagung des Druckraums bewirkt für eine derartige Dichtungslage eine Druckfläche, die sich auf das Querschnittsprofil des kreisringförmigen Druckraums beschränkt. Die sich einstellende resultierende Kraft zwischen der Führungshülse und dem Zylinder des Ausrücksystems wird im Vergleich zu dem bekannten Stand der Technik deutlich herabgesetzt. Die Abdichtstelle innerhalb der Kontur des kreisringförmigen Druckraums ermöglicht selbst bei hohen bis 50 bar reichenden Betätigungsdrücken die Verwendung von handelsüblichen Kunststoffen, ohne daß unzulässig hohe Spannungen bzw. bleibende Deformationen des Zylindergehäuses eintreten. Die erfindungsgemäße Abdichtung ermöglicht folglich ein kostenoptimiertes Ausrücksystem, das gleichzeitig gewichtsoptimiert ausgelegt ist.

Allen Abdichtungen gemeinsam ist eine Einbaulage, die mit der Projektionsfläche der kreisringförmigen Fläche des Druckraums weitestgehend übereinstimmt. Im Betriebszustand des Ausrücksystems, d. h. bei Anliegen des Betriebsdruckes, tritt dadurch keine resultierende Kraft auf, die größer ist als die von der kreisringförmigen Fläche des Druckraums sich einstellende axiale Betriebskraft. Aufgrund der niedrigen axialen Kraftkomponente, im Vergleich zu einer radial zur Druckraumfläche nach außen versetzt angeordneten Dichtung bedarf die erfindungsgemäße Führungshülsenanordnung keine besondere Abstützung am Zylinder bzw. am Getriebegehäuse, um unzulässig hohe Spannungen zu kompensieren, die zu einer Deformation des Zylinders führen können. Der Bord der Führungshülse bzw. der Zylinder wird folglich von keiner überlagerten, erhöhten Druckbelastung beaufschlagt.

In einer vorteilhaften Ausgestaltung der Erfindung ist die spanlos aus Blech durch ein Tiefziehverfahren hergestellte Führungshülse mit einem endseitig radial nach außen gerichteten Bord am Zylinder befestigt. Dieser umlaufend oder alternativ sektionsweise angeordnete, rechtwinkelig zu der Längsachse des Ausrücksystems ausgerichtete Bord ermöglicht eine automatengerechte Montage der Führungshülse und positioniert diese exakt am bzw. im Zylinder. Dazu bietet es sich an, den Zylinder mit einer der Abmessung des Bordes entsprechenden stirnseitigen, ringförmigen Ausnehmung zu versehen, in die der Bord in der Einbaulage eingreift. Die Tiefe der stimseitigen Ringnut kann dabei entsprechend der Wandstärke des Bordes gewählt werden, so daß sich eine plane Stirnfläche am Zylinder einstellt. Alternativ schließt die Erfindung weiterhin eine die Wandstärke des Bordes übertreffende Ringnuttiefe ein zur Aufnahme von Halte- oder Sicherungsmitteln für den Bord der Führungshülse in der Ringnut.

Eine weitere Ausgestaltung der Führungshülse sieht vor, daß deren Bord zur Erzielung einer ausreichenden Abstützfläche den Durchmesser der Führungshülse deutlich übertrifft. Dazu ist ein Durchmesserverhältnis von ≥ 1,2 zwischen dem Außendurchmesser des Bordes und dem Mantelflächen-Durchmesser der Führungshülse vorgesehen.

Eine weitere Ausgestaltung der Erfindung sieht einen axial vorstehenden Ansatz des Zylinders vor, der in der Einbaulage in den Ringraum der Führungshülse eingreift. Zur Zentrierung liegt eine zylindrische Wandung des Ringraums an dem axial vorstehenden Ansatz des Zylinders an.

Eine axiale Abstützung der Führungshülse erfolgt erfindungsgemäß über den radial ausgerichteten, sich an die Mantelfläche der Führungshülse anschließenden Bord. Für eine Führungshülse, die getriebeseitig mit einem axial vorstehenden Ringraum versehen ist, bietet sich eine axiale Abstützung über den radial ausgerichteten Endabschnitt an, welcher den Ringraum außen umschließt.

Das erfindungsgemäße Ausrücksystem ist vorteilhaft zusammengesetzt aus einem aus Kunststoff hergestellten Zylinder, der mit einer Führungshülse aus Stahl oder Aluminium kombiniert ist.

### Kurze Beschreibung der Zeichnungen

Die Erfindung wird im folgenden anhand der Zeichnungsbeschreibung von mehreren Ausführungsbeispielen näher erläutert. Es zeigen:
- Figur 1: einen Längsschnitt durch ein hydraulisches Ausrücksystem, in dem eine Führungshülse integriert ist;
- Figur 1a: das Detail "X" gemäß Figur 1 in einem vergrößerten Maßstab;
- Figur 1b: eine Alternative zu der in Figur 1a dargestellten Befestigung der Führungshülse;
- Figur 2: ein Ausrücksystem, dessen Führungshülse an einem Aufnahmebund des Zylinders befestigt ist;
- Figur 2a: das Detail "Z" aus Figur 2 in einem vergrößerten Maßstab;
- Figur 3: ein hydraulisches Ausrücksystem, dessen Führungshülse einen radial gestuften Endbereich aufweist;
- Figur 3a: eine zu Figur 3 alternativ gestaltete Anordnung der Führungshülsen-Abdichtung;
- Figur 4: in einem vergrößerten Maßstab den zum Getriebegehäuse ausgerichteten Endbereich der Führungshülse, die in radialer Richtung einen einseitig offenen Ringraum bildet, an den sich ein umlaufender Endabschnitt anschließt;
- Figur 5: eine im Zylinder eingesetzte erfindungsgemäße Führungshülse, deren getriebeseitig axial vorstehender Ringraum einen hülsenartigen Ansatz des Zylinders umschließt;
- Figur 6: in einem vergrößerten Maßstab einen Bord einer Führungshülse, welcher über eine Schnappverbindung am Zylinder lagepositioniert ist;
- Figur 7: in einem Längsschnitt einen aus Kunststoff hergestellten Zylinder, der einstückig mit einer Hülse verbunden ist, auf der die Führungshülse abgedichtet und lagepositioniert ist.

### Ausführliche Beschreibung der Zeichnungen

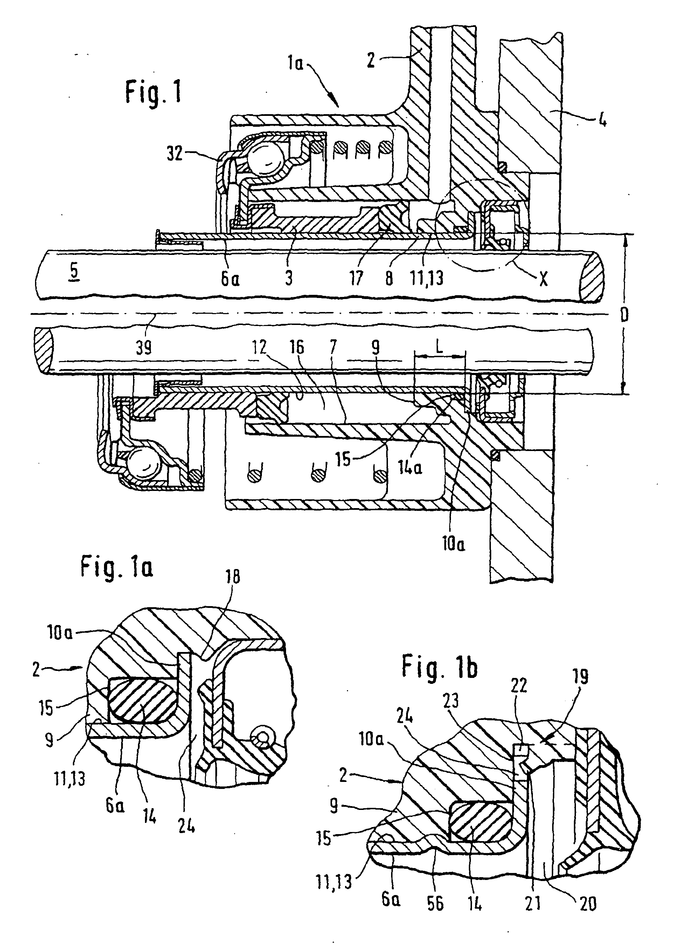

Die in Fig. 1-4, 6, 7 gezeigte Ausrücksysteme sind nicht erfindungsgemäß.

In Figur 1 ist ein hydraulisches Ausrücksystem 1a in einem Längsschnitt abgebildet. Der Aufbau umfaßt einen Nehmerzylinder, d. h. eine Kolben-Zylindereinheit mit einem aus Kunststoff hergestellten Zylinder 2 und einem verschiebbar geführten Ringkolben 3. In einer Einbaulage ist der Zylinder 2 lösbar an einem Getriebegehäuse 4 befestigt und dabei konzentrisch zu einer Antriebswelle 5 angeordnet, die eine Brennkraftmaschine mit einem Schaltgetriebe verbindet. Der Ringkolben 3 ist auf einer Führungshülse 6a geführt, die radial beabstandet zur Antriebswelle 5 und zu einer Bohrung 7 des Zylinders 2 angeordnet ist. Die vorzugsweise aus Stahl durch ein Tiefziehverfahren spanlos hergestellte Führungshülse 6a ist mit einer Endzone 8 über einen Preßsitz in einem radial versetzt zur Bohrung 7 angeordneten Aufnahmebund 9 des Zylinders 2 gehalten. Die Führungshülse 6a ist endseitig mit einem radial nach außen gerichteten Bord 10a versehen, der sich in der Einbaulage der Führungshülse 6a an der zum Getriebegehäuse 4 ausgerichteten Stirnseite des Zylinders 2 abstützt. Zur Abdichtung eines Ringspaltes 11 zwischen einer Mantelfläche 12 der Führungshülse 6a und einer Aufnahmebohrung 13 des Zylinders 2 dient eine Dichtung 14a, die in einer Ausnehmung 15, einem Dichtringeinstich des Zylinders 2 an der zum Bord 10a gerichteten Stirnseite des Zylinders 2 eingesetzt ist.

Bedingt durch die Gestaltung, den Einbau und die Abdichtung der Führungshülse 6a stellt sich ein vorteilhaft reduzierter, druckbeaufschlagter Ringbereich der Führungshülse 6a ein. Das heißt, bei einer Betätigung des Ausrücksystems 1a erfolgt dichtungsseitig lediglich eine Druckbeaufschlagung des durch die Nuthöhe des Dichtringeinstichs, d. h. der Ausnehmung 15 bestimmten Ringraums. Da der Dichtringeinstich, die Ausnehmung 15, innerhalb der kreisringförmigen Kontur des Druckraums 16 angeordnet ist, stellt sich keine resultierende Kraft zwischen der Führungshülse 6a und dem Zylinder 2 ein. Der Bereich, der im Betriebszustand mit axialen Betriebskräften beaufschlagt wird, beschränkt sich danach auf die kreisringförmige Fläche des Druckraums 16. Die Nuthöhe des Dichtringeinstichs, bzw. der Ausnehmung 15 bewirkt folglich keine überlagerte Krafteinleitung. Der im Druckraum 16 ansteigende Druck bei einer Betätigung des Ausrücksystems führt folglich nicht zu einer nachteiligen, axialen Kraftkomponente in Richtung des Bordes 10a der Führungshülse 6a.

Zur Erzielung einer exakten Einbaulage der Führungshülse 6a im Zylinder 2, d. h. zur Vermeidung einer Schiefstellung ist ein Maßverhältnis, zwischen der Länge "L" des Aufnahmebundes 9 und dem Innendurchmesser "D" der Aufnahmebohrung 13 bzw. dem Außendurchmesser der Mantelfläche 12 vorgesehen. Als ein wirksames Maßverhältnis, mit dem eine ausreichende Führung erreichbar ist, konnte ein Maß "D" bestimmt werden, das ≧ dem dreifachen Wert des Maßes "L" entspricht. Die Mantelfläche 12 der Führungshülse 6a besitzt in einem dem Aufnahmebund 9 entsprechenden Abschnitt einen Preßsitzdurchmesser, der geringfügig den übrigen Druchmesser der Mantelfläche 12 übertrifft. Dieser Durchmesserunterschied bewirkt, daß beim Einsetzten der Führungshülse 6a in den Aufnahmebund 9 die als Dichtungslaufbahn für die Kolbendichtung 17 dienende Mantelfläche 12 nicht beschädigt wird.

Die Figur 1a zeigt in einem vergrößerten Maßstab das Detail "X" der Führungshülse 6a mit dem zugehörigen Bord 10a. Als eine unterstützende Maßnahme zu dem Preßsitz der Führungshülse 6a im Zylinder 2 dient eine Verstemmung 18, mit der Material des Zylinders 2 radial nach innen verstemmt wird zur Erzielung einer radialen Überdeckung mit der Endzone des Bordes 10a. Die Verstemmung 18 gewährleistet folglich eine definierte Lageposition und kann außerdem in Verbindung mit dem Bord 10a, der sektionsweise Aussparungen 24 aufweist, als eine Verdrehsicherung benutzt werden. Die Figur 1a verdeutlicht weiterhin den reduzierten, druckbeaufschlagten, durch die Nuthöhe der Ausnehmung 15 bestimmten Ringbereich. Die Abdichtung der Führungshülse 6a liegt damit innerhalb der kreisringförmigen Kontur des Druckraums 16.

in Figur 1b ist der Bord 10a über einen Bajonettverschluß 19 im Zylinder 2 lagefixiert. Dazu weist der Zylinder 2 im Bereich einer stirnseitigen Ausnehmung 20 radial nach innen gerichtete Vorsprünge 21 auf, deren Abstand 22 zu einer Anlage 23 sich von einer Öffnung kontinuierlich verjüngt. Aussparungen 24 im Bord 10a ermöglichen durch eine entsprechende Ausrichtung, daß sich der Bord 10a an der Anlage 23 abstützt. Ein Verdrehen der Führungshülse 6a in Richtung eines sich verjüngenden Abstandes 22 bewirkt ein Verklemmen des Bordes 10a zwischen den Vorsprüngen 21 und der Anlage 23. Zur unterstützenden Befestigung der Führungshülse 6a im Aufnahmebund 9 ist die Führungshülse 6a mit radial nach außen gerichteten Verprägungen 56 versehen, die in der Einbaulage der Führungshülse 6a kraftschlüssig an der Aufnahmebohrung 13 abgestützt sind bzw. sich an der Bohrungswandung verkrallen.

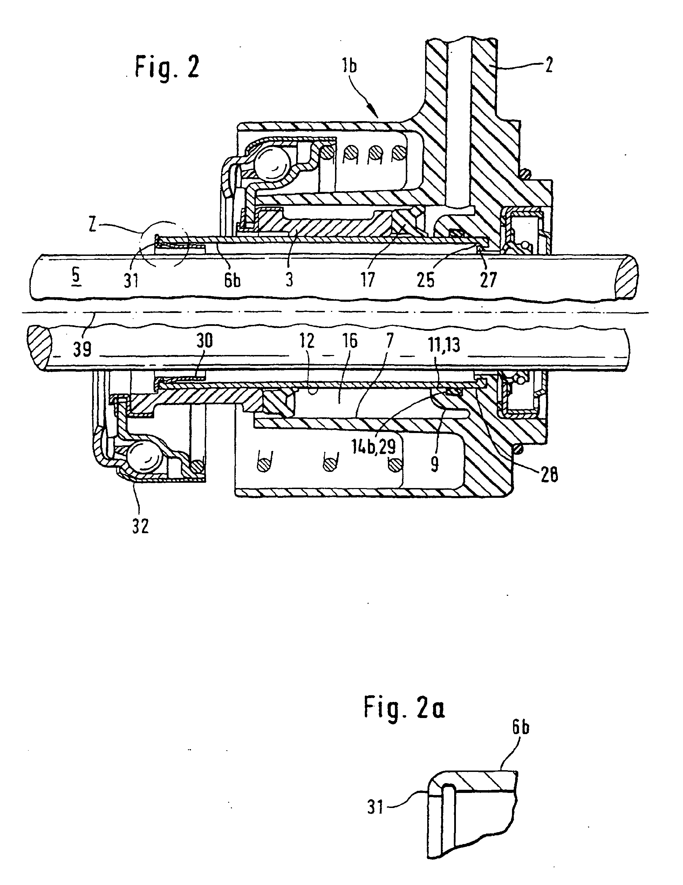

In der Figur 2 ist das Ausrücksystem 1b abgebildet. Die einzelnen Bauteile stimmen weitestgehend mit dem in Figur 1 dargestellten Ausrücksystem 1a überein, wobei gleiche Bauteile auch mit gleichen Bezugsziffern versehen sind.

In das Ausrücksystem 1b ist die Führungshülse 6b integriert, die über einen Preßsitz im Aufnahmebund 9 gehalten ist. Der Aufnahmebund 9 ist dabei radial gestuft gestaltet und bildet eine Ringnut 25, in die ein Endabsschnitt 28 der Führungshülse 6b eingreift. Als eine unterstützende Maßnahme zur Befestigung der Führungshülse 6b im Aufnahmebund 9 ist eine Wandung 27 der Ringnut 25 in Richtung der Führungshülse 6b verstemmt. Zur Abdichtung des Ringspaltes 11 zwischen der Mantelfläche 12 der Führungshülse 6b und der Aufnahmebohrung 13 ist die in einer Radialnut 29 eingesetzte Dichtung 14b vorgesehen. Die Führungshülse 6b ist an dem vom Aufnahmebund 9 abgewandten Ende mit einem separaten Begrenzungsring 30 versehen, der an einem Bördelbund 31 der Führungshülse 6b verschnappt ist. Damit bildet die Führungshülse 6b für den Ringkolben 3 einen Endanschlag, wodurch das Ausrücksystem 1 b als eine vormontierbare Einheit vorkompletiert werden kann. Diese Einheit umfaßt auch ein am Ringkolben 3 befestigtes Ausrücklager 32.

In Figur 2a ist der Bördelbund 31, die Einzelheit "Z" gemäß Figur 2, in einem vergrößerten Maßstab abgebildet. Darin ist verdeutlicht, daß der Innendurchmesser des Bördelbundes 31 den Innendurchmesser des übrigen Führungshülsenabschnitts unterschreitet.

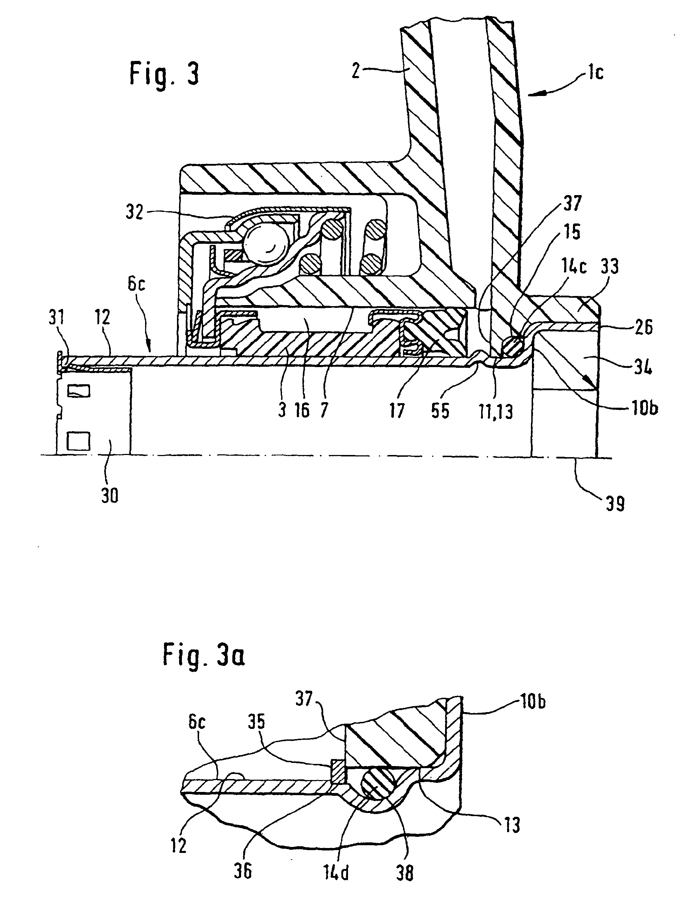

Die Figur 3 zeigt das Ausrücksystem 1c, das mit einer weiteren Gestaltung einer Führungshülse 6c versehen ist. Alle übrigen Bauteile des Ausrücksystems 1c stimmen weitestgehend überein mit dem in Figur 1 abgebildeten Ausrücksystem 1a, die folglich auch mit gleichen Bezugszeichen versehen sind. Bezüglich deren Beschreibung kann auf die Ausführung zum ersten Ausführungsbeispiel verwiesen werden. Die Führungshülse 6c gemäß Figur 3 bildet getriebeseitig eine radiale Stufe, d. h. an den Bord 10b schließt sich ein zylindrisch bzw. axial ausgerichteter Abschnitt 26 an, der außenseitig vollständig von einem ringartig ausgebildeten Vorsatz 33 des Zylinders 2 umschlossen ist. Die radiale Stufe der Führungshülse 6c ermöglicht weiterhin die Aufnahme eines Radialwellendichtrings 34, der sich axial an dem Bord 10b abstützt und zur Abdichtung der Antriebswelle 5 dient, welche die Brennkraftmaschine mit dem Schaltgetriebe verbindet. Zur Abdichtung der Führunghülse 6c gegenüber dem Gehäuse 2 dient die Dichtung 14c, die in einer als Dichtungseinstich gestalteten Ausnehmung 15 eingesetzt ist und die sich in einem durch die Mantelfläche 12 und dem Bord 10b gebildeten rechtwinkligen Abschnitt der Führungshülse 6c dichtend anliegt. Die Führungshülse 6c ist so gestaltet, daß deren Bord 10b sich axial am Zylinder abstützt. Die Zentrierung der Führungshülse 6c erfolgt über den Abschnitt 26, der radial vorgespannt an dem Vorsatz 33 des Zylinders 2 anliegt. Als Einbausicherung bzw. zur Schaffung einer unverlierbaren Einheit ist die Führungshülse 6c durch einen Wulst 55 lagefixiert. Die Anordnung der Wulst 55 sieht vor, daß diese sich an der Schulter 37 des Zylinders 2 abstützt.

Die Figur 2a zeigt eine alternative Abdichtung der Führungshülse 6c. Dazu ist diese mit einer radial in Richtung einer Längsachse 39 des Ausrücksystems 1c ausgerichteten Ringwulst versehen, die eine Ringnut 38 bildet zur Aufnahme der Dichtung 14d. Die axial versetzt zum Bord 10b angeordnete Dichtung 14d stützt sich im eingebauten Zustand dichtend an der Aufnahmebohrung 13 des Zylinders 2 ab. Zur Lagefixierung der Führungshülse 6c ist in die Mantelfläche 12 der Führungshülse 6c eine Ringnut 36 eingebracht, in die der Sicherungsring 35 eingesetzt ist, der sich in der Einbaulage an einer Schulter 37des Zylinders 2 abstützt.

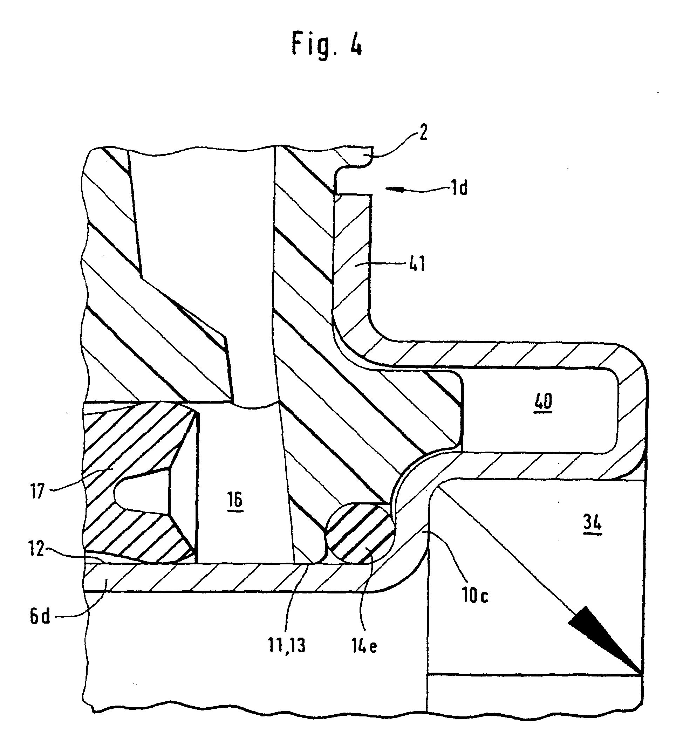

Das Ausrücksystem 1d gemäß Figur 4 ist ausschnittsweise in einem vergrößerten Maßstab abgebildet und zeigt das in Richtung des Getriebegehäuses gerichtete Ende der Führunghülse 6d. Die Gestaltung der Führungshülse 6d umfaßt einen Ringraum 40, der sich in radialer Richtung nach außen an den Bord 10c anschließt, axial vom Zylinder 2 vorstehend angeordnet und in Richtung des Zylinders 2 offen gestaltet ist. Rechtwinklig zum Ringraum 40 ist ein Endabschnitt 41 vorgesehen, welcher den Ringraum 40 außen umschließt und über den die Führungshülse 6d axial am Zylinder 2 abgestützt ist. Die Zentrierung der Führungshülse 6d erfolgt über die Mantelfläche 12, die sich an der Wandung der Aufnahmebohrung 13 des Zylinders 2 abstützt. Die Abdichtung des Ringspaltes 11 zwischen der Führungshülse 6d und dem Zylinder 2 erfolgt durch die Dichtung 14e, deren Einbaulage übereinstimmt mit der Dichtung 14c gemäß Figur 3.

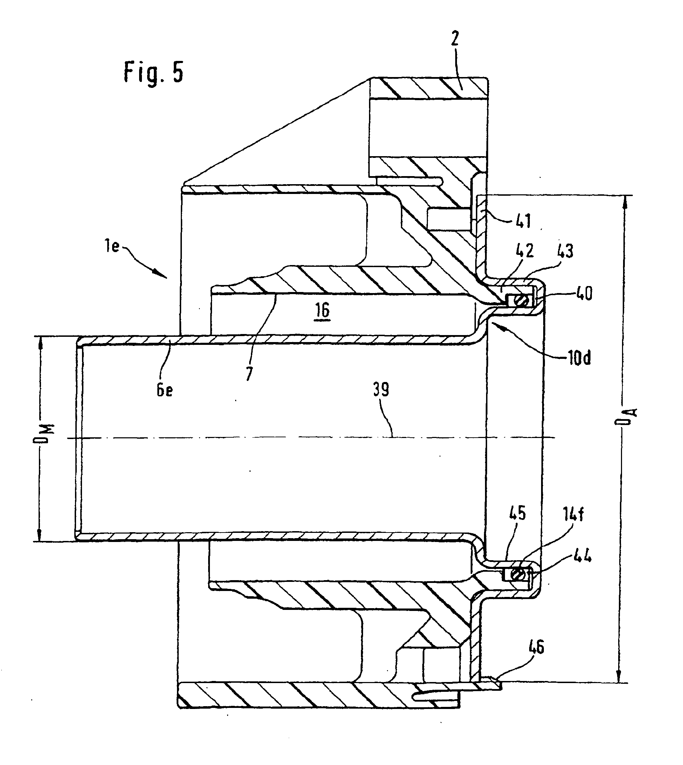

Die Figur 5 zeigt von dem Ausrücksystem 1e den Zylinder 2 sowie die Führungshülse 6e. Ähnlich der in Figur 4 abgebildeten Führungshülse 6d bildet die Führungshülse 6e ebenfalls einen radial zum Bord 10d versetzten Ringraum 40, der einen axial vorstehenden Ansatz 42 des Zylinders 2 umschließt. Die Zentrierung der Führungshülse 6e erfolgt über die äußere, dem Ringraum 40 zugehörige Wandung 43, welche sich auf der Mantelfläche des Ansatzes 42 abstützt. Über den Endabschnitt 41 ist die Führungshülse 6e flächig am Zylinder 2 abgestützt. Zur Abdichtung der Führungshülse 6e gegenüber dem Zylinder 2 dient die Dichtung 14f. Diese ist in einer stirnseitigen Ausnehmung 44 des Ansatzes 42 eingesetzt und liegt im eingebauten Zustand an der inneren Wandung 45 des Ringraums 40 an. Die Außenkontur der Ausnehmung 44 stimmt dabei überein mit der innenwandung der Bohrung 7. Damit ist bei einer Druckbeaufschlagung des Druckraums 16 sichergestellt, daß der gleichzeitig druckbeaufschlagte Ringraum der Ausnehmung 44 für die Dichtung 14f innerhalb der kreisringförmigen Kontur des Druckraums 16 angeordnet ist und sich dadurch keine zusätzliche resultierende Kraft einstellt. In Figur 5 ist weiterhin eine Haltesicherung der Führungshülse 6e abgebildet. Dazu verfügt das Gehäuse 2 über zumindest eine elastisch angeordnete Schnappnase 46, die den Endabschnitt 41 der Führunghülse 6e in der Einbaulage radial übergreift.

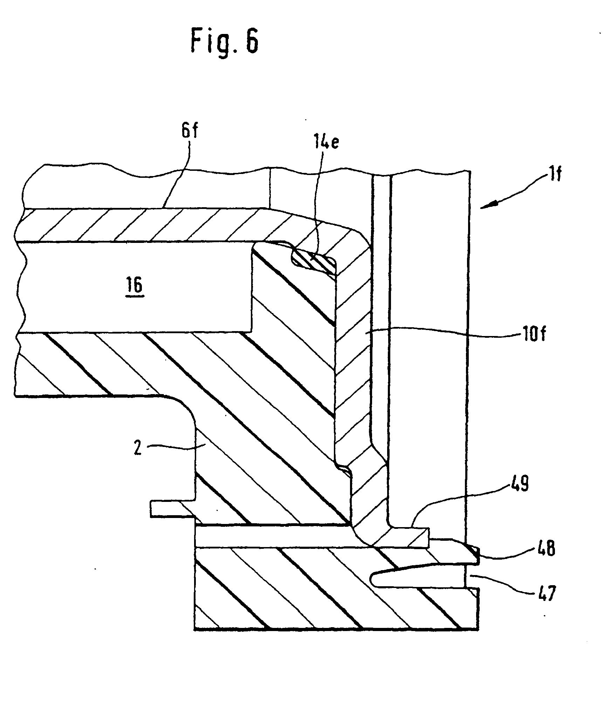

Aus der Figur 6 ist eine alternativ gestaltete Haltesicherung der Führungshülse 6f am Zylinder 2 in dem Ausrücksystem 1f dargestellt. Die Führungshülse 6f ist dazu ebenfalls elastisch am Zylinder 2 verschnappt. Dazu ist in den Zylinder 2 zumindest ein axialer Einschnitt 47 eingebracht zur Bildung einer Schnappnase 48, an dem eine Abkantung 49 des Bordes 10f in der Einbaulage der Führungshülse 6f verschnappt.

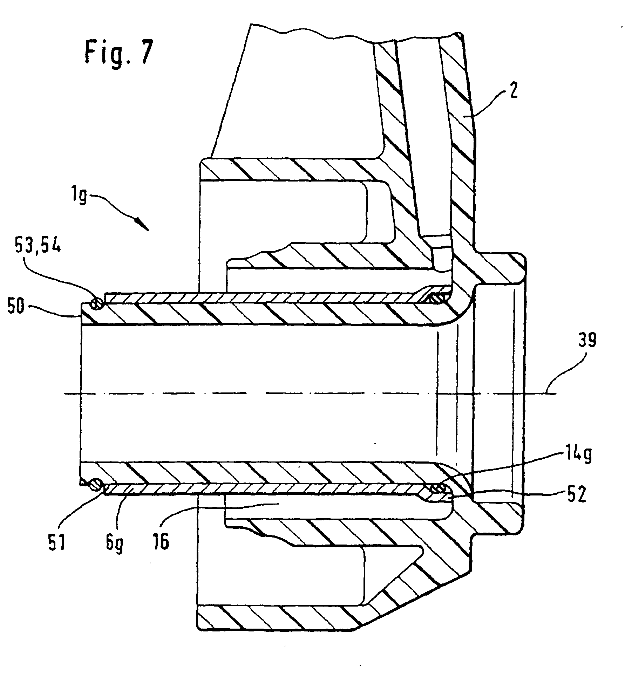

Das in Figur 7 abgebildete Ausrücksystem 1g ist gebildet aus einem Zylinder 2 aus Kunststoff, der einstückig mit einem die Längsachse 39 konzentrisch umschließenden Hülse 50 verbunden ist. Dabei dient die Hülse 50 zur Stützung der aus Stahl oder Aluminium hergestellten Führungshülse 6g. Zur Abdichtung des sich zwischen der Hülse 50 und der Führungshülse 6g bildenden
Ringspaltes 51 ist die Führungshülse 6g druckraumseitig mit einer umlaufenden Wulst 52 versehen zur Aufnahme der Dichtung 14g, die in der Einbaulage der Führungshülse 6g am Zylinder 2 abgestützt ist. Eine Lagefixierung der Führungshülse 6g erfolgt durch einen Sicherungsring 53, der in eine Ringnut 54 der Hülse 50 eingesetzt ist.

### Bezugszeichen

- 1a: Ausrücksystem
- 1b: Ausrücksystem
- 1c: Ausrücksystem
- 1d: Ausrücksystem
- 1e: Ausrücksystem
- 1f: Ausrücksystem
- 1g: Ausrücksystem
- 2: Zylinder
- 3: Ringkolben
- 4: Getriebegehäuse
- 5: Antriebswelle
- 6a: Führungshülse
- 6b: Führungshülse
- 6c: Führungshülse
- 6d: Führungshülse
- 6e: Führungshülse
- 6f: Führungshülse
- 6g: Führungshülse
- 7: Bohrung
- 8: Endzone
- 9: Aufnahmebund
- 10a: Bord
- 10b: Bord
- 10c: Bord
- 10d: Bord
- 10e: Bord
- 11: Ringspalt
- 12: Mantelfläche
- 13: Aufnahmebohrung
- 14a: Dichtung
- 14b: Dichtung
- 14c: Dichtung
- 14d: Dichtung
- 14e: Dichtung
- 14f: Dichtung
- 14g: Dichtung
- 15: Ausnehmung
- 16: Druckraum
- 17: Kolbendichtung
- 18: Verstemmung
- 19: Bajonettverschluß
- 20: Ausnehmung
- 21: Vorsprung
- 22: Abstand
- 23: Anlage
- 24: Aussparung
- 25: Ringnut
- 26: Abschnitt
- 27: Wandung
- 28: Endabschnitt
- 29: Radialnut
- 30: Begrenzungsring
- 31: Bördelbund
- 32: Ausrücklager
- 33: Vorsatz
- 34: Radialwellendichtring
- 35: Sicherungsring
- 36: Ringnut
- 37: Schulter
- 38: Ringnut
- 39: Längsachse
- 40: Ringraum
- 41: Endabschnitt
- 42: Ansatz
- 43: Wandung
- 44: Ausnehmung
- 45: Wandung
- 46: Schnappnase
- 47: Einschnitt
- 48: Schnappnase
- 49: Abkantung
- 50: Hülse
- 51: Ringspalt
- 52: Wulst
- 53: Sicherungsring
- 54: Ringnut
- 55: Wulst
- 56: Verprägung

## Patentansprüche

1. Druckmittelbeaufschlagbares Ausrücksystem (1e) für eine Schalttrennkupplung von Fahrzeugen, umfassend:
- eine konzentrisch zu einer Antriebswelle angeordnete, als Nehmerzylinder bezeichnete Kolben-Zylindereinheit, deren Zylinder (2) lösbar an einem Getriebegehäuse befestigt ist;
- einen Ringkolben, der in einem kreisringförmig gestalteten, von einer Wandung der Bohrung (7) des Zylinders (2) und einer Mantelfläche einer Führungshülse (6e) radial begrenzten Druckraum (16) geführt ist;
- ein Ausrücklager, das an dem vom Druckraum (16) abgewandten Ende der Fütinrngshülse (6e) befestigt ist und mit Ausrückelementen der Schaftfrennkupplung in Wirkverbindung steht;
- die Führungshülse (6e) ist am Zylinder (2) lagepositioniert und abgedichtet befestigt;
- die Führungshülse (6e) ist axial abgestützt am Zylinder (2) befestigt;
- eine Dichtung (14f) ist so zwischen der Führungshülse (6e) und dem Zylinder (2) angeordnet, daß deren Lage Innerhalb oder teilweise radial nach innen versetzt zu einer Projektion der kreisringförmigen Fläche des Druckraums (16) liegt,
- die Dichtung (14f) ist in einer stirnseitigen Ausnehmung (44) des Ansatzes (42) eingesetzt;
- die Zentrierung der Führungshülse (6e) erfolgt über die äußere dem Ringraum (40) zugehörige Wandung (43), welche sich auf der Mantelfläche des Ansatzes (42) abstützt;
wobei die Führungshülse (6e) radial zentriert am Zylinder (2) befestigt ist, und der Zylinder (2) einen Ansatz (42) aufweist, der in einen in der Führungshulse (6e) gebildeten Ringraum (40) eingreift, wobei zwischen dem Ansatz (42) und einer den Ringraum (40) begrenzenden Wandung die Dichtung (14f) vorgesehen ist und die Führungshülse (6e) auf dem Ansatz zentriert ist, wobei die Dichtung (14f) an der radial Inneren Wandung (45) des Ringraums (40) anliegt.

2. Ausrücksystem nach Anspruch 1, **dadurch gekennzeichnet** das die vorzugsweise spanlos hergestellte Führungshülse (6e) über einen endseitig an dem zum Getriebegehäuse gerichteten Ende mit einem nach außen gerichteten Bord am Zylinder (2) befestigt ist, wobei der Bord rechtwinkelig zu einer Längsachse (39) des Ausrücksystems (1e) ausgerichtet ist.

3. Ausrücksystem nach Anspruch 1, **dadurch gekennzeichnet, daß** der Ringraum (40) außenseitig von einem Endabschnitt (41) umschlossen ist.

4. Ausrücksystem nach Anspruch 2, **gekennzeichnet durch** ein Durchmesserverhältnis ≥ 1,2 zwischen einem Außendurchmossser (Dₐ) des Bordes (10d) und dem Außendurchmesser (D_{M}) von der Mantelfläche (12) der Führungshülse (6e).

5. Ausrücksystem nach Anspruch 1, **dadurch gekennzeichnet, dass** die Führungshülse (6e) an dem axial vorstehenden, in den Ringraum (40) der Führungshülse (6e) eingreifenden Ansatz (42) des Zylinders (2) zentriert ist.

6. Ausrücksystem nach Anspruch 1, **gekennzeichnet durch** eine axiale Abstützung der Führungshülse (6e) am Zylinder (2) über den radialen Endabschnitt (41), der den Ringraum (40) umschließt.

7. Ausrücksystem nach Anspruch 1, **dadurch gekennzeichnet daß** die Dichtung (14f) in einer stirnseitigen Ausnehmung (44) des Ansatzes (42) von Zylinder (2) eingesetzt ist und an einer Wandung (45) des Ringraums (40) der Führungshülse (6e) dichtend anliegt.

8. Ausrücksystem nach Anspruch 1, **gekennzeichnet durch** einen aus Kunststoff hergestellten Zylinder (2), der mit einer Fuhrungshülse (6e) aus Aluminium oder Stahl kombiniert ist.

## Claims

1. A release system (1e) pressurisable with a hydraulic medium for a gearshift disengagement clutch for vehicles, comprising:
- a piston-cylinder unit called a slave cylinder arranged concentrically with a drive shaft, whereof the cylinder (2) is fixed detachably to a gearbox casing;
- an annular piston, which is guided in an annular pressure chamber (16) radially bounded by a wall of the hole (7) of the cylinder (2) and a lateral surface of a guide sleeve (6e);
- a release bearing, which is fixed to the end of the guide sleeve (6e) facing away from the pressure chamber (16) and is in active connection with release elements of the gearshift disengagement clutch;
- the guide sleeve (6e) is fixed in position and sealed on the cylinder (2);
- the guide sleeve (6e) is fixed axially supported on the cylinder (2);
- a seal (14f) is arranged between the guide sleeve (6e) and the cylinder (2) in such a way that its position lies inside, or partially offset radially inwards with respect to, a projection of the annular surface of the pressure chamber (16),
- the seal (14f) is inserted in an endface cut-out (44) of the neck (42);
- the centring of the guide sleeve (6e) takes place by means of the outer wall (43) associated with the annular space (40), which wall (43) is supported on the lateral surface of the neck (42); wherein the guide sleeve (6e) is fixed radially centred on the cylinder (2), and the cylinder (2) has a neck (42) which engages in an annular space (40) formed in the guide sleeve (6e), whereby the seal (14f) is provided between the neck (42) and a wall bounding the annular space (40) and the guide sleeve (6e) is centred on the neck, with the seal (14f) lying against the radially inner wall (45) of the annular space (40).

2. The release system according to claim 1, **characterised in that** the guide sleeve (6e) preferably produced without cutting is fixed to the cylinder (2) with a flange pointing outwards at the end pointing to the gearbox casing, whereby the flange is directed at right angles to a longitudinal axis (39) of the release system (1e).

3. The release system according to claim 1, **characterised in that** the annular space (40) is surrounded on the outside by an end section (41).

4. The release system according to claim 2, **characterised by** a diameter ratio of ≥ 1.2 between an outer diameter (Dₐ) of the flange (10d) and the outer diameter (D_{M}) of the lateral surface (12) of the guide sleeve (6e).

5. The release system according to claim 1, **characterised in that** the guide sleeve (6e) is centred on the axially projecting neck (42) of the cylinder (2), said neck engaging in the annular space (40) of the guide sleeve (6e).

6. The release system according to claim 1, **characterised by** an axial support of the guide sleeve (6e) on the cylinder (2) by means of the radial end section (41) which surrounds the annular space (40).

7. The release system according to claim 1, **characterised in that** the seal (14f) is inserted in an endface cut-out (44) of the neck (42) of cylinder (2) and lies tightly against a wall (45) of the annular space (40) of the guide sleeve (6e).

8. The release system according to claim 1, **characterised by** a cylinder (2) produced from plastic, which is combined with a guide sleeve (6e) made of aluminium or steel.

## Revendications

1. Système de débrayage (1e) pouvant être sollicité par un milieu sous pression, pour un système d'embrayage de véhicules, comprenant :
- un ensemble cylindre - piston désigné comme étant un cylindre récepteur, disposé de façon concentrique par rapport à un arbre d'entraînement, ensemble cylindre - piston dont le cylindre (2) est fixé de façon démontable sur un carter de boîte de vitesses ;
- un piston annulaire qui est guidé dans un espace sous pression (16) en forme de couronne circulaire, limité dans le sens radial par une paroi de l'alésage (7) du cylindre (2) et par une surface d'enveloppe d'un manchon de guidage (6e) ;
- une butée de débrayage qui est fixée sur l'extrémité du manchon de guidage (6e), placée à l'opposé de l'espace sous pression (16), et est en relation active avec des éléments de débrayage du système d'embrayage ;
- le manchon de guidage (6e) est fixé en position et hermétiquement sur le cylindre (2) ;
- le manchon de guidage (6e) est fixé en appui axialement sur le cylindre (2) ;
- un joint d'étanchéité (14f) est disposé entre le manchon de guidage (6e) et le cylindre (2), de manière telle que la position du joint d'étanchéité se trouve à l'intérieur ou de manière partiellement décalée vers l'intérieur, dans le sens radial, par rapport à une projection de la surface, en forme de couronne circulaire, de l'espace sous pression (16),
- le joint d'étanchéité est inséré dans un évidement (44) colé frontal du talon (42) ;
- le centrage du manchon de guidage (6e) s'effective par le biais de la paroi extérieure (43) associée à l'espace annulaire (40), qui s'appuie sur la surface d'enveloppe du talon (42) ; le manchon de guidage (6e) étant fixé de manière centrée radialement sur le cylindre (2),
et le cylindre (2) présente un talon (42) qui s'engage dans un espace annulaire (40) formé dans le manchon de guidage (6e), le joint d'étanchéité (14f) étant prévu entre le talon (42) et une paroi limitant l'espace annulaire (40), et le manchon de guidage (6e) centré sur le talon, le joint d'étanchéité s'applicaquant coutre la paroi (45) radialement interne de l'espace annulaire (40).

2. Système de débrayage selon la revendication 1, **caractérisé en ce que** le manchon de guidage (6e), fabriqué de préférence sans enlèvement de copeaux, est fixé sur le cylindre (2), à l'un bord, tourné vers l'extérieur par une extrémité tournée vers le carter de boite de vitesses, avec le bord étant orienté perpendiculairement par rapport à un axe longitudinal (39) du système de débrayage (1e).

3. Système de débrayage selon la revendication 1, **caractérisé en ce que** l'espace annulaire (40) est entouré, côté extérieur, par une partie d'extrémité (41).

4. Système de débrayage selon la revendication 2, **caractérisé par** un rapport de diamètres ≥ 1,2 entre un diamètre extérieur (Dₐ) du bord (10d) et le diamètre extérieur (D_{M}) de la surface d'enveloppe (12) du manchon de guidage (6e).

5. Système de débrayage selon la revendication 1, **caractérisé en ce que** le manchon de guidage (6e) est centré sur le talon (42) du cylindre (2), en saillie axialement, s'engageant dans l'espace annulaire (40) du manchon de guidage (6e).

6. Système de débrayage selon la revendication 1, **caractérisé par** un appui axial du manchon de guidage (6e) sur le cylindre (2), par la partie d'extrémité radiale (41) qui entoure l'espace annulaire (40).

7. Système de débrayage selon la revendication 1, **caractérisé en ce que** le joint d'étanchéité (14f) est inséré dans un évidement (44), côté frontal, du talon (42) du cylindre (2) et est en appui, de façon étanche, sur une paroi (45) de l'espace annulaire (40) du manchon de guidage (6e).

8. Système de débrayage selon la revendication 1, **caractérisé par** un cylindre (2) fabriqué en matière plastique, ce cylindre étant combiné à un manchon de guidage (6e) en aluminium ou en acier.
